# EUROPÄISCHE PATENTSCHRIFT

(11) **EP 2 704 521 B1**
(45) Veröffentlichungstag und Bekanntmachung des Hinweises auf die Patenterteilung: **14.10.2020**
(21) Anmeldenummer: 13180550.9
(22) Anmeldetag: 15.08.2013
(51) Int. Cl.: H05B 6/06, F24C 7/08, G01J 5/00

(54) **Hausgerätevorrichtung**
Domestic appliance
Dispositif d'appareil ménager

(30) Priorität: 03.09.2012 ES 201231355
(43) Veröffentlichungstag der Anmeldung: 05.03.2014
(73) Patentinhaber: BSH Hausgeräte GmbH, 81739 München (DE)
(72) Erfinder: Alonso Esteban, Rafael, 22004 Huesca (ES); Heras Vila, Carlos, 50002 Zaragoza (ES); Imaz Martinez, Eduardo, 50018 Zaragoza (ES); Llorente Gil, Sergio, 50009 Zaragoza (ES); Paesa García, David, 50015 Zaragoza (ES); Rivera Peman, Julio, 50410 Cuarte de Huerva (Zaragoza) (ES); Salinas Ariz, Iñigo, 50009 Zaragoza (ES); Villuendas Yuste, Francisco, 50009 Zaragoza (ES)

(56) Entgegenhaltungen:
- JP-A- 2003 317 920
- JP-A- 2006 294 286
- JP-A- 2011 138 734
- US-A1- 2002 146 056

## Beschreibung

Die Erfindung geht aus von einer Hausgerätevorrichtung nach dem Oberbegriff des Anspruchs 1.

Aus der JP 2006 294286 A ist ein Kochfeld bekannt, das zur Temperaturbestimmung zwei Infrarotsensoren aufweist, wobei jeder der Infrarotsensoren über eine Lichtleitfaser mit einem Messpunkt verbunden ist.

In der Druckschrift US 2002/0146056 A1 wird ein Vermessen eines Objektkörpers beschrieben, welcher sich innerhalb eines Brennofens befindet. Dieses Dokument lehrt, ein Abbild des zu detektierenden Objekts zu ermitteln und dieses derart auf einem Display darzustellen, dass ein Temperaturverlauf in dem zu detektierenden Objekt für einen Bediener sichtbar wird. Zur Erstellung dieses Abbilds wird die von dem Objekt emittierte Strahlung in zwei Teilstrahlen aufgeteilt, die dazu vorgesehen sind, von zwei unterschiedlichen Bildsensoren detektiert zu werden.

Die Aufgabe der Erfindung besteht insbesondere darin, eine gattungsgemäße Vorrichtung mit verbesserten Eigenschaften hinsichtlich eines guten Messergebnisses bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Hausgerätevorrichtung, insbesondere einer Gargerätevorrichtung, vorzugsweise einer Kochfeldvorrichtung, nach Anspruch 1.

Die Sensoreinheit zumindest eine Strahlteilereinheit aufweist, die dazu vorgesehen ist, von einem Messpunkt ausgehende Strahlung in zumindest zwei Teilstrahlen aufzuteilen, die dazu vorgesehen sind, von unterschiedlichen der Lichtsensoren detektiert zu werden.

Unter einer "Sensoreinheit" soll insbesondere eine Einheit verstanden werden, die zumindest ein Sensorelement aufweist. Unter einem "Sensorelement" soll insbesondere ein Element verstanden werden, das dazu vorgesehen ist, eine zu bestimmende physikalische Größe, insbesondere eine Temperatur und/oder zumindest eine Strahlungskenngröße, insbesondere eine Strahlungsintensität, in zumindest eine andere, vorteilhaft elektrische, Kenngröße, insbesondere einen Strom, eine Spannung, einen Wiederstand, eine Kapazität und/oder eine Induktivität, umzuwandeln. Vorzugsweise weist die Sensoreinheit zumindest eine, vorzugsweise elektrische, Auswerteelektronik auf, die dazu vorgesehen ist, die andere, vorzugsweise elektrische, Kenngröße zu messen. Insbesondere weist die Auswerteelektronik zumindest einen Verstärkerschaltkreis auf. Vorteilhaft ist die Auswerteelektronik dazu vorgesehen, die Kenngröße in ein für eine Steuereinheit auswertbares, vorteilhaft digitales, Signal zu wandeln.

Unter einem "Lichtsensor" soll insbesondere ein Sensorelement verstanden werden, das dazu vorgesehen ist, zumindest eine Kenngröße elektromagnetischer Strahlung zu messen. Insbesondere ist der Lichtsensor dazu vorgesehen, eine Intensität einfallender Infrarotstrahlung zu messen. Insbesondere ist der Lichtsensor als Photodiode ausgebildet. Insbesondere ist der Lichtsensor dazu vorgesehen, Licht mit Wellenlängen kleiner als 4 µm, insbesondere kleiner als 3 µm, vorteilhaft kleiner als 2,6 µm, zu detektieren.

Insbesondere ist der Messpunkt von einem Oberflächenstück einer, vorzugsweise zumindest teilweise transparenten, Heizzonenbegrenzungseinheit, insbesondere einer Kochfeldplatte, alternativ einer Garraumwand, gebildet. Darunter, dass ein Element "teilweise" transparent ist, soll insbesondere verstanden werden, dass das Element in zumindest einem Spektralbereich, insbesondere zumindest einem Spektralbereich mit einer Breite von zumindest 300 nm, vorteilhaft zumindest 500 nm, vorzugsweise zumindest 900 nm, vorteilhaft im Bereich infraroter Strahlung, insbesondere zwischen 1,2 µm und 1,7 µm, vorteilhaft zwischen 1,2 µm und 2,6 µm, eine Transparenz von zumindest 30 %, insbesondere zumindest 50 %, vorteilhaft zumindest 70 %, aufweist.

Die Strahlteilereinheit ist dazu vorgesehen, die Strahlung simultan in zumindest zwei Teilstrahlen aufzuteilen. Insbesondere ist die Strahlteilereinheit dazu vorgesehen, die Teilstrahlen in einem Winkel von zumindest 5°, vorteilhaft zumindest 20°, vorzugsweise zumindest 80 °, und insbesondere maximal 120°, zueinander auszusenden.

Vorteilhaft weist die Sensoreinheit zumindest eine Führungseinheit auf, die dazu vorgesehen ist, zumindest einen ersten der Teilstrahlen von der Strahlteilereinheit zu einem ersten der Lichtsensoren zu führen und/oder einen zweiten der Teilstrahlen von der Strahlteilereinheit zu einem zweiten der Lichtsensoren zu führen. Insbesondere weist die Strahlteilereinheit zumindest ein Fokusierelement, insbesondere eine Linse, auf, die dazu vorgesehen ist, zumindest einen der Teilstrahlen zu formen. In alternativen Ausgestaltungen ist es denkbar, dass die Strahlteilereinheit dazu vorgesehen ist, die Strahlung abwechselnd, vorzugsweise periodisch abwechselnd, insbesondere mit einer Frequenz größer als 1 Hz, insbesondere größer 10 Hz, vorteilhaft größer 100 Hz, vorzugsweise größer 1000 Hz, verschiedenen Teilstrahlen zuzuordnen. Insbesondere weist die Strahlteilereinheit dazu zumindest ein elektrooptisches Element und/oder zumindest ein beweglich, insbesondere schwankend, kippend und/oder rotierend, angeordnetes Element, insbesondere ein Spiegel, und einen Aktor auf, um das bewegliche Element zu bewegen.

Unter "vorgesehen" soll insbesondere speziell programmiert, ausgelegt und/oder ausgestattet verstanden werden.

Insbesondere können durch die Aufteilung der Strahlung eines Messpunkts gegenüber der Verwendung der Strahlung zweier, nahe beieinander liegender Messpunkte eine verbesserte Messung erreicht werden, da Messungenauigkeiten durch unterschiedliche Eigenschaften der Messpunkte vermieden werden.

Die Sensoreinheit weist zumindest eine Lichtführungseinheit auf, die dazu vorgesehen ist, Licht von dem Messpunkt zu der Strahlteilereinheit zu leiten. Vorzugsweise weist die Lichtführungseinheit zumindest eine Lichtleitfaser auf und/oder ist von dieser gebildet. Unter einer "Lichtleitfaser" soll insbesondere ein Lichtleitelement verstanden werden, das als Faser ausgebildet ist und dazu vorgesehen ist, auf Basis von Totalreflexion einen seitlichen Lichteinschluss zu erreichen. Unter einer Faser soll insbesondere ein, vorzugsweise flexibles, Element verstanden werden, das eine Dicke aufweist, die maximal 20 %, insbesondere maximal 10 %, vorteilhaft maximal 5 %, vorzugsweise maximal 1 %, einer Länge des Elements entspricht. Vorzugsweise weist die Faser einen zumindest ovalen, vorzugsweise kreisrunden, Querschnitt auf. Insbesondere weist die Glasfaser einen kleinsten Biegeradius von maximal 5 cm, insbesondere maximal 4 cm, vorteilhaft maximal 3 cm, auf. Insbesondere ist die Lichtleitfaser von Glas gebildet. Vorzugsweise weist die Lichtleitfaser im Zentrum einen größeren Brechungsindex auf als in zumindest einem Randbereich. Insbesondere unterliegt der Brechungsindex, ausgehend vom Zentrum zum Rand hin, einem abfallenden Gradienten. Insbesondere weist die Lichtleitfaser eine Kernfaser mit einem Durchmesser von zumindest 200 µm, insbesondere zumindest 300 µm, vorteilhaft zumindest 500 µm, auf. Insbesondere weist die Lichtleitfaser eine numerische Apertur von zumindest 0,1, vorteilhaft zumindest 0,2, und insbesondere von maximal 0,5, vorteilhaft von maximal 0,3, auf. Weiterhin ist es denkbar, dass die Lichtführungseinheit alternativ und/oder zusätzlich zumindest ein Prisma und/oder zumindest einen Spiegel aufweist. Es kann insbesondere eine Anordnung der Lichtsensoren entfernt von dem Messpunkt erreicht werden.

Weiterhin wird vorgeschlagen, dass die Strahlteilereinheit dazu vorgesehen ist, die von dem Messpunkt ausgehende Strahlung in zumindest zwei Teilstrahlen aufzuteilen, deren Spektren zumindest im Wesentlichen ähnlich sind. Darunter, dass zwei Spektren "ähnlich" sind, soll insbesondere verstanden werden, dass Verhältnisse von wellenlängenabhängigen Intensitäten der Spektren über zumindest einen Wellenlängenbereich, insbesondere zumindest im infraroten Spektralbereich, vorteilhaft zumindest im Bereich zwischen 1,2 µm und 2,6 µm, vorzugsweise zumindest im Bereich zwischen 1,2 µm und 1,7 µm, maximal 30 %, insbesondere maximal 10 %, vorteilhaft maximal 5 %, vorzugsweise maximal 1 %, von einer Ähnlichkeitskonstante abweichen. Insbesondere weist die Ähnlichkeitskonstante einen Wert auf, der weniger als 0,1 von 1 abweicht. Alternativ ist es denkbar, dass die Ähnlichkeitskonstante einen Wert aufweist, der zwischen 0,01 und 100 liegt. Insbesondere weist die Strahlteilereinheit zumindest ein doppelbrechendes optisches Element und/oder zumindest eine Anordnung zur Erzeugung einer gestörten Totalreflexion auf. Insbesondere ist die Ähnlichkeitskonstante durch die Strahlteilereinheit festgelegt. Insbesondere weist die Strahlteilereinheit zumindest ein doppelbrechendes optisches Element und/oder zumindest eine Anordnung zur Erzeugung einer gestörten Totalreflexion, die insbesondere von zwei mit Spalt angeordneten Prismen gebildet ist, auf. Es können insbesondere gleiche Ausgangsbedingungen für die Lichtsensoren geschaffen werden.

Ferner wird vorgeschlagen, dass die Sensoreinheit zumindest eine Filtereinheit aufweist, die zwischen der Strahlteilereinheit und den Lichtsensoren angeordnet ist. Unter einer "Filtereinheit" soll insbesondere eine Einheit verstanden werden, die zumindest ein Filterelement aufweist. Unter einem "Filterelement" soll insbesondere ein Element verstanden werden, das dazu vorgesehen ist, zumindest einen Teil eines Spektrums elektromagnetischer Strahlung zu absorbieren. Insbesondere ist das Filterelement als Hochpassfilter ausgebildet und ist dazu vorgesehen, elektromagnetische Strahlung zu absorbieren, deren Wellenlänge kleiner ist als eine Grenzwellenlänge. Alternativ ist eine Ausgestaltung als Tiefpassfilter oder als Bandpassfilter denkbar. Insbesondere ist die Filtereinheit dazu vorgesehen, die Teilstrahlen unterschiedlich zu filtern. Darunter, dass zwei Teilstrahlen unterschiedlich gefiltert sind, soll insbesondere verstanden werden, dass ihre Spektren nicht ähnlich sind. Insbesondere beträgt eine Transparenz der Filtereinheit im Strahlengang eines der Teilstrahlen in zumindest einem Wellenlängenteilbereich, zumindest einem doppelten, insbesondere zumindest einem fünffachen, vorteilhaft zumindest einem zwanzigfachen, vorzugsweise zumindest einem hundertfachen, einer Transparenz der Filtereinheit im Strahlengang des anderen der Teilstrahlen für den Wellenlängenteilbereich. Insbesondere weist der Wellenlängenteilbereich eine Breite von zumindest 100 nm, vorteilhaft zumindest 300 nm, vorzugsweise zumindest 500 nm auf, und/oder liegt zwischen 1,2 µm und 2,6 µm. Vorteilhaft ist die Filtereinheit dazu vorgesehen, das Spektrum im Bereich zwischen 1,2 µm und 1,7 µm, vorzugsweise zwischen 1,2 µm und 2,6 µm, auf die gefilterten Teilstrahlen aufzuteilen. Insbesondere ist die Strahlteilereinheit dazu vorgesehen, insbesondere durch Wahl des Ähnlichkeitsfaktors, Teilstrahlen zu erzeugen, deren Intensität, nach Passieren der Filtereinheit vergleichbar ist, insbesondere in den Lichtsensoren vergleichbare Werte der Kenngröße erzeugt. Unter "vergleichbaren" Werten sollen insbesondere Werte verstanden werden, deren Verhältnis zueinander zwischen 0,001 und 1000, insbesondere zwischen 0,01 und 100, vorteilhaft zwischen 0,033 und 30, vorzugsweise zwischen 0,1 und 10, liegt. Es kann insbesondere eine verbesserte Messwertbestimmung erreicht werden.

Alternativ wird vorgeschlagen, dass die Strahlteilereinheit dazu vorgesehen ist, die von dem Messpunkt ausgehende Strahlung zumindest teilweise wellenlängenabhängig aufzuteilen. Vorteilhaft ist die Strahlteilereinheit dazu vorgesehen, die Strahlung von dem Messpunkt spektral zumindest im Bereich zwischen 1,2 µm und 1,7 µm, vorzugsweise zwischen 1,2 µm und 2,6 µm, auf die Teilstrahlen aufzuteilen. Insbesondere ist die Strahlteilereinheit dazu vorgesehen, die Strahlung Wellenlängenabhängig den Teilstrahlen zuzuordnen. Insbesondere ist die Strahlteilereinheit dazu vorgesehen, einen Teil der von dem Messpunkt stammenden Strahlung, deren Wellenlänge kleiner ist als eine erste Grenzwellenlänge, einem ersten Teilstrahl zuzuordnen und einen zweiten Teil der von dem Messpunkt stammenden Strahlung, deren Wellenlänge größer ist als die Grenzwellenlänge, einem zweiten Teilstrahl zuzuordnen. Insbesondere weist die Strahlteilereinheit zumindest ein optisches Element auf, das zumindest im Wellenlängenbereich zwischen 1,2 µm und 2,6 µm einen stark wellenlängenabhängigen Brechungsindex aufweist. Es kann insbesondere eine bauteilsparende Ausführung erreicht werden. Insbesondere kann auf eine, auf die Strahlteilereinheit folgende, Filtereinheit verzichtet werden.

Ferner wird vorgeschlagen, dass die Hausgerätevorrichtung zumindest eine Auswerteelektronik aufweist, die dazu vorgesehen ist, in zumindest einem Betriebsmodus, aus den Signalen der zumindest zwei Lichtsensoren eine Temperatur zu bestimmen. Insbesondere weist die Auswerteelektronik zumindest eine Recheneinheit, vorteilhaft zumindest eine Speichereinheit und ein in der Speichereinheit hinterlegtes Betriebsprogramm auf, das dazu vorgesehen ist, von der Recheneinheit ausgeführt zu werden. Insbesondere weist die Auswerteelektronik zumindest einen Verstärkerschaltkreis auf. Vorteilhaft ist die Auswerteelektronik dazu vorgesehen, die Kenngröße in ein für eine Steuereinheit auswertbares, vorteilhaft digitales, Signal zu wandeln. Insbesondere ist die Auswerteelektronik dazu vorgesehen, zumindest eine Summe der Signale der zumindest zwei Lichtsensoren zur Bestimmung der Temperatur zu nutzen. Es kann insbesondere eine gute Temperaturbestimmung erreicht werden. Vorteilhaft wird vorgeschlagen, dass die Auswerteelektronik dazu vorgesehen ist, die Temperatur zumindest aus einem Verhältnis der Signale der zumindest zwei Lichtsensoren zu bestimmen. Es kann insbesondere eine gute Temperaturbestimmung erreicht werden.

Bevorzugt wird die Erfindung in Gargeräten, insbesondere Herden und/oder Kochfeldern, eingesetzt. Aber auch in anderen Hausgeräten, in denen eine berührungslose Temperaturbestimmung angestrebt wird, ist diese Erfindung vorteilhaft einsetzbar.

Weitere Vorteile ergeben sich aus der folgenden Zeichnungsbeschreibung. In der Zeichnung ist ein Ausführungsbeispiel der Erfindung dargestellt.

Es zeigen:
- Fig. 1: ein erfindungsgemäßes Kochfeld in einer schematischen Ansicht von oben und
- Fig. 2: eine erfindungsgemäße Kochfeldvorrichtung in einer schematischen Schnittdarstellung.

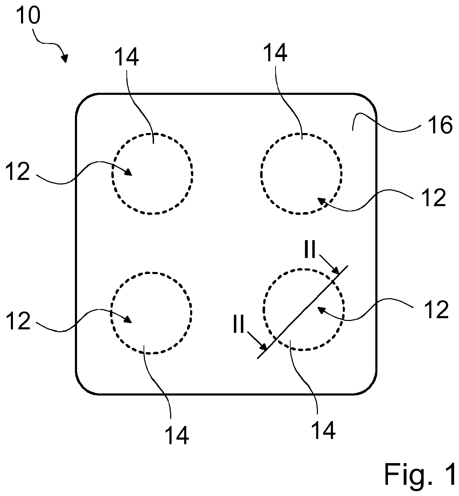

Figur 1 zeigt ein als Kochfeld ausgebildetes Hausgerät 10 mit vier, jeweils als Kochfeldvorrichtung ausgebildeten, Hausgerätevorrichtungen 12. Das Hausgerät 10 ist als Induktionskochfeld ausgebildet. Die Hausgerätevorrichtungen 12 weisen jeweils ein Heizelement 14 auf, das unter einer Heizzonenbegrenzungseinheit 16 angeordnet ist. Die Heizelemente 14 sind als Induktionsheizelemente ausgebildet. Die Heizzonenbegrenzungseinheit 16 ist als eine von Glaskeramik gebildete Kochfeldplatte ausgebildet.

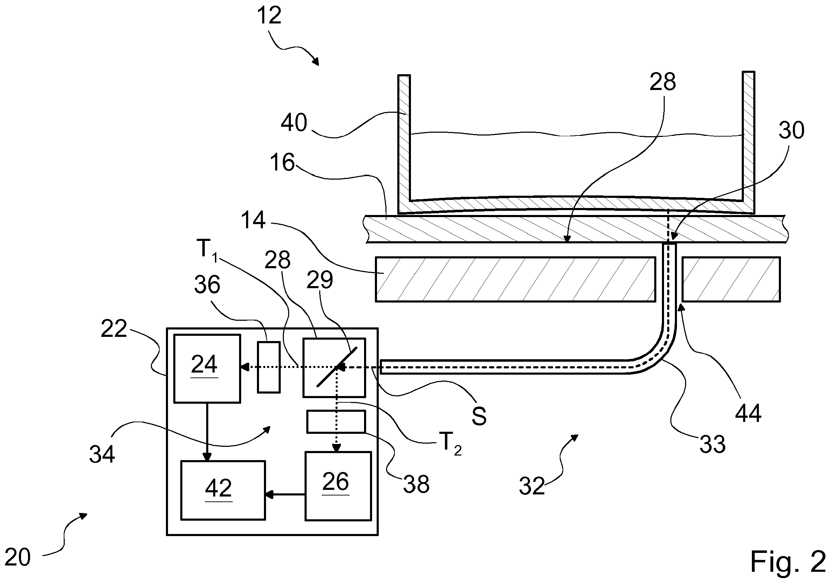

Die Hausgerätevorrichtungen 12 weisen jeweils eine Sensoreinheit 20 auf (Figur 2). Die Sensoreinheit 20 weist jeweils ein Lichtsensormodul 22 mit zwei Lichtsensoren 24, 26 auf. Die Lichtsensoren 24, 26 sind jeweils als Infrarotphotodioden ausgebildet und sind dazu vorgesehen, Licht in einem Wellenlängenbereich zwischen 1 µm und 2,6 µm zu detektieren. Weiterhin weist die Sensoreinheit 20 eine Strahlteilereinheit 28 auf, die dazu vorgesehen ist, von einem Messpunkt 30 ausgehende Strahlung S in zumindest zwei Teilstrahlen T₁, T₂ aufzuteilen, die dazu vorgesehen sind, von unterschiedlichen der zwei Lichtsensoren 24, 26 detektiert zu werden. Die Sensoreinheit 20 weist eine Lichtführungseinheit 32 auf, die dazu vorgesehen ist, Licht von dem Messpunkt 30 zu der Strahlteilereinheit 28 zu leiten. Die Lichtführungseinheit 32 ist von einer Lichtleitfaser 33 gebildet. Die Lichtleitfaser 33 ist als Glasfaser ausgebildet. Die Lichtleitfaser 33 weist einen Kerndurchmesser von 1 mm und eine numerische Apertur von 0,22 auf. Der Messpunkt 30 ist an einer Unterseite der Heizzonenbegrenzungseinheit 16 angeordnet. Die Lichtführungseinheit 32 ist dazu vorgesehen, Licht, das zumindest teilweise von einem, auf der Heizzonenbegrenzungseinheit 16 aufgestellten, Gargeschirr 40 stammt und durch die Heizzonenbegrenzungseinheit 16 transmittiert wurde, an dem Messpunkt 30 aufzunehmen und zu der Strahlteilereinheit 28 zu leiten. Die Lichtführungseinheit 32 ist dabei durch eine Ausnehmung 44 in dem Heizelement 14 geführt. Die Ausnehmung 44 ist nahe einem Zentrum des Heizelements14 angeordnet.

Die Strahlteilereinheit 28 ist dazu vorgesehen, die von dem Messpunkt 30 stammende Strahlung S in zumindest zwei Teilstrahlen T₁, T₂ aufzuteilen, deren Spektren ähnlich sind. Die Strahlteilereinheit 28 ist dazu vorgesehen, Teilstrahlen T₁, T₂ mit einem Ähnlichkeitsfaktor von 0,1 zu erzeugen, wobei eine Intensität des Teilstrahls T₁ einem zehnfachen einer Intensität des Teilstrahls T₂ entspricht. Die Strahlteilereinheit 28 ist von einem teildurchlässigen Spiegel 29 gebildet. Die Sensoreinheit 20 weist weiterhin zumindest eine Filtereinheit 34 auf, die zwischen der Strahlteilereinheit 28 und den Lichtsensoren 24, 26 angeordnet ist. Die Filtereinheit 34 weist zwei Filterelemente 36, 38 auf. Ein erstes der Filterelemente 36 ist als Bandpassfilter ausgebildet und ist dazu vorgesehen, Licht in einem Wellenlängenbereich unter 1,2 µm und über 2,3 µm zu absorbieren. Das erste Filterelement 36 ist dazu vorgesehen, einen ersten der Teilstrahlen T₁ zu filtern. Das erste Filterelement 36 ist zwischen der Strahlteilereinheit 28 und einem ersten der Lichtsensoren 24 angeordnet. Ein zweites der Filterelemente 38 ist als Hochpassfilter ausgebildet und ist dazu vorgesehen, Licht in einem Wellenlängenbereich unter 2,3 µm zu detektieren. Das zweite Filterelement 38 ist dazu vorgesehen, einen zweiten der Teilstrahlen T₂ zu filtern. Das zweite Filterelement 38 ist optisch zwischen der Strahlteilereinheit 28 und einem zweiten der Lichtsensoren 26 angeordnet.

In alternativen Ausgestaltungen ist es denkbar, dass Lichtsensoren dazu vorgesehen sind, Licht in einem Wellenlängenbereich zwischen 0,9 und 1,7 µm zu detektieren, wobei Filterelemente das Spektrum zwischen 0,9 µm und 1,7 µm an einer Grenzwellenlänge 1,5 µm auf die Teilstrahlen aufteilen.

Weiterhin weist die Sensoreinheit 20 eine Auswerteelektronik 42 auf, die dazu vorgesehen ist, aus den Signalen der zwei Lichtsensoren 24, 26 eine Temperatur zu bestimmen. Die Auswerteelektronik 42 ist dazu vorgesehen, eine Summe der Signale zu einer Temperaturbestimmung zu benutzen. Um eine verbesserte Temperaturbestimmung durchzuführen, ermittelt die Auswerteelektronik 42 ein Verhältnis der Signale der zwei Lichtsensoren 24, 26.

Die Auswerteelektronik 42 ermittelt aus gleichzeitig aufgenommenen Strommesswerten der zwei Lichtsensoren 24, 26 ein Verhältnis der Strommesswerte. Ein ermitteltes Verhältnis der Signale wird über eine Kalibriertabelle bzw. eine Kalibrierkurve einer Temperatur zugeordnet.

### Bezugszeichen

- 10: Hausgerät
- 12: Hausgerätevorrichtung
- 14: Heizelement
- 16: Heizzonenbegrenzungseinheit
- 20: Sensoreinheit
- 22: Lichtsensormodul
- 24: Lichtsensor
- 26: Lichtsensor
- 28: Strahlteilereinheit
- 29: teildurchlässiger Spiegel
- 30: Messpunkt
- 32: Lichtführungseinheit
- 33: Lichtleitfaser
- 34: Filtereinheit
- 36: Filterelement
- 38: Filterelement
- 40: Gargeschirr
- 42: Auswerteelektronik
- 44: Ausnehmung
- S: Strahlung
- T₁: Teilstrahl
- T₂: Teilstrahl

## Patentansprüche

1. Hausgerätevorrichtung, insbesondere Kochfeldvorrichtung, mit zumindest einer Sensoreinheit (20), die zumindest zwei Lichtsensoren (24, 26) aufweist, **dadurch gekennzeichnet, dass** die Sensoreinheit (20) zumindest eine Strahlteilereinheit (28) aufweist, die dazu vorgesehen ist, von einem Messpunkt (30) ausgehende Strahlung (S) in zumindest zwei Teilstrahlen (T₁, T₂) aufzuteilen, die dazu vorgesehen sind, von unterschiedlichen der Lichtsensoren (24, 26) detektiert zu werden, wobei die Sensoreinheit (20) zumindest eine Lichtführungseinheit (32) aufweist, die dazu vorgesehen ist, Licht von dem Messpunkt (30) zu der Strahlteilereinheit (28) zu leiten und die von einer Lichtleitfaser (33) gebildet ist.

2. Hausgerätevorrichtung nach Anspruch 1, **dadurch gekennzeichnet, dass** die Strahlteilereinheit (28) dazu vorgesehen ist, die von dem Messpunkt (30) ausgehende Strahlung (S) in zumindest zwei Teilstrahlen (T₁, T₂) aufzuteilen, deren Spektren zumindest im Wesentlichen ähnlich sind.

3. Hausgerätevorrichtung nach einem der vorhergehenden Ansprüche, **dadurch gekennzeichnet, dass** die Sensoreinheit (20) zumindest eine Filtereinheit (34) aufweist, die zwischen der Strahlteilereinheit (28) und den Lichtsensoren (24, 26) angeordnet ist.

4. Hausgerätevorrichtung nach einem der vorhergehenden Ansprüche, **gekennzeichnet durch** zumindest eine Auswerteelektronik (42), die dazu vorgesehen ist, in zumindest einem Betriebsmodus aus den Signalen der zumindest zwei Lichtsensoren (24, 26) eine Temperatur zu bestimmen.

5. Hausgerätevorrichtung nach Anspruch 4, **dadurch gekennzeichnet, dass** die Auswerteelektronik (42) dazu vorgesehen ist, die Temperatur zumindest aus einem Verhältnis der Signale der zumindest zwei Lichtsensoren (24, 26) zu bestimmen.

6. Hausgerät, insbesondere Kochfeld, mit zumindest einer Hausgerätevorrichtung (12) nach einem der vorhergehenden Ansprüche.

7. Verfahren zum Betrieb einer Hausgerätevorrichtung (12) zumindest nach Anspruch 5, aufweisend zumindest den Schritt: bestimmen eine Temperatur aus den Signalen der zwei Lichtsensoren.

## Claims

1. Household appliance device, in particular hob device, having at least one sensor unit (20), which has at least two light sensors (24, 26), **characterised in that** the sensor unit (20) has at least one beam splitter unit (28), which is provided to split radiation (S) coming from one measuring point (30) into at least two partial beams (T₁, T₂), which are provided to be detected by different light sensors (24, 26), wherein the sensor unit (20) has at least one light guiding unit (32) which is provided to guide light from the measuring point (30) to the beam splitter unit (28) and is formed by an optical fibre (33).

2. Household appliance device according to claim 1, **characterised in that** the beam splitter unit (28) is provided to split radiation (S) coming from the measuring point (30) into at least two partial beams (T₁, T₂), the spectra of which are at least essentially similar.

3. Household appliance device according to one of the preceding claims, **characterised in that** the sensor unit (20) has at least one filter unit (34), which is arranged between the beam splitter unit (28) and the light sensors (24, 26).

4. Household appliance device according to one of the preceding claims, **characterised by** at least one electronic evaluation unit (42), which is provided to determine a temperature in at least one operating mode from the signals of the at least two light sensors (24, 26).

5. Household appliance device according to claim 4, **characterised in that** the electronic evaluation unit (42) is provided to determine the temperature at least from a ratio of the signals of the at least two light sensors (24, 26).

6. Household appliance, in particular hob, having at least one household appliance device (12) according to one of the preceding claims.

7. Method for operating a household appliance device (12) at least according to claim 5, having at least the step: determining a temperature from the signals of the two light sensors.

## Revendications

1. Dispositif d'appareil ménager, notamment dispositif de table de cuisson, comprenant au moins une unité de capteurs (20) qui comprend au moins deux capteurs de lumière (24, 26), **caractérisé en ce que** l'unité de capteurs (20) comprend au moins une unité de séparation de faisceau (28) qui est ménagée pour diviser le rayonnement (S) partant d'un point de mesure (30) en au moins deux faisceaux partiels (T₁, T₂) lesquels sont ménagés pour être détectés par des capteurs différents des capteurs de lumière (24, 26), dans lequel l'unité de capteurs (20) comprend au moins une unité de guidage de lumière (32) qui est ménagée pour guider la lumière du point de mesure (30) vers l'unité de séparation de faisceau (28) et qui est formée par une fibre optique (33).

2. Dispositif d'appareil ménager selon la revendication 1, **caractérisé en ce que** l'unité de séparation de faisceau (28) est ménagée pour diviser le rayonnement (S) partant d'un point de mesure (30) en au moins deux faisceaux partiels (T₁, T₂) dont les spectres sont au moins essentiellement identiques.

3. Dispositif d'appareil ménager selon l'une quelconque des revendications précédentes, **caractérisé en ce que** l'unité de capteurs (20) comprend au moins une unité de filtrage (34) qui est disposée entre l'unité de séparation de faisceau (28) et les capteurs de lumière (24, 26).

4. Dispositif d'appareil ménager selon l'une quelconque des revendications précédentes, **caractérisé par** au moins un dispositif électronique d'évaluation (42) qui est ménagé pour déterminer, dans au moins un mode de fonctionnement, une température à partir des signaux des au moins deux capteurs de lumière (24, 26).

5. Dispositif d'appareil ménager selon la revendication 4, **caractérisé en ce que le** dispositif électronique d'évaluation (42) est ménagé pour déterminer la température au moins à partir d'un rapport des signaux des au moins deux capteurs de lumière (24, 26).

6. Appareil ménager, notamment table de cuisson, comprenant au moins un dispositif d'appareil ménager (12) selon l'une quelconque des revendications précédentes.

7. Procédé de fonctionnement d'un dispositif d'appareil ménager (12) au moins selon la revendication 5, comprenant au moins l'étape :
détermination d'une température à partir des signaux des deux capteurs de lumière.
